# EUROPEAN PATENT APPLICATION

(11) **EP 4 741 036 A1**
(43) Date of publication of application: **13.05.2026**
(21) Application number: 25211697.5
(22) Date of filing: 28.10.2025
(51) Int. Cl.: B01D 46/00, B01D 46/24, B01D 46/52, B01D 46/58, B01D 46/71

(54) **A FILTER CARTRIDGE AND AN AIR TREATMENT MACHINE**

(30) Priority: 08.11.2024 SE 2451118
(71) Applicant: Camfil Aktiebolag, 111 34 Stockholm (SE)
(72) Inventor: HAIST, Ralf, 88662 Überlingen (DE); HERTLE, Waldemar, 78532 Tuttlingen (DE); PERSSON, Ulf, 271 73 Köpingebro (SE); PAPACCIO, Mailin, 78579 Neuhausen ob Eck (DE)
(74) Representative: Zacco Sweden AB

(57) **Abstract**

The disclosure relates to a pulse filter cartridge (10) for an air treatment machine (100), the filter cartridge (10) being configured to surround a body (110) of the air treatment machine (100), the filter cartridge (10) comprising: a filter media (20) surrounding an inner space (22); and a first end pan (40) arranged at a first end (10') of the filter cartridge (10); wherein the first end pan (40) comprises a guiding section (50) on the inner side (41), the guiding section (50) being configured to be arranged in abutment with a correspondingly shaped end section (120) of the body (110), and the first end pan (40) further comprises a fastening section (60) on the outer side (42) for interaction with a fastening arrangement (140) of the air treatment machine (100), the fastening section (60) being shaped so as to, when mating with the fastening arrangement (140), position the filter cartridge (10) in a predetermined rotational orientation on the body (110).

## Description

### Technical field

The present disclosure relates to a filter cartridge for an air treatment machine and an air treatment machine for air pollution control. More specifically, the disclosure relates to a pulse filter cartridge for an air treatment machine and an air treatment machine for air pollution control as defined in the introductory parts of the independent claims.

### Background art

Air treatment machines for air pollution control, such as dust, mist and fume collectors, may comprise one or more filter cartridges to clean the air. Such machines may be used for example in industrial environments relating to metal processing, pharmaceutical processing, mining, food processing, chemical processing and other industries. Different types of filter cartridges may be used and one common type is the so-called pulse filter. A pulse filter, also called self-cleaning filter, comprises a filter media surrounding an inner volume. The particulate matter accumulate on an external surface of the filter media and pulses of compressed air is provided at regular intervals to the inner volume. The compressed air pulses will dislodge the accumulated particulate matter from the filter media surface and the particulate matter will fall into a collection hopper by gravity. This way, the pulse filter can be used for a longer time with minimal downtime due to service and maintenance or change of filter.

Pulse filter cartridges used in air treatment machines are today typically attached to the machine by means of nuts and washers on a threaded axle extending through a center hole of and end pan of the filter cartridge. A problem with the prior art solution is that it is complicated and cumbersome to mount and dismount the filter cartridges since it requires separate tools and comprises multiple separate parts. Furthermore, the fastening arrangement including the threaded axle and the center hole in the end pan may cause leakages and thus quality issues. There is therefore a need for an improved way of attaching pulse filter cartridges in air treatment machines.

### Summary

It is an object of the present disclosure to mitigate, alleviate or eliminate one or more of the above-identified deficiencies and disadvantages in the prior art and solve at least the above-mentioned problem.

An object of the present disclosure is to achieve a pulse filter cartridge which is easier to mount and dismount in an air treatment machine.

A further object of the present disclosure is to achieve a pulse filter cartridge which is less prone to leakage and thereby has an improved performance.

According to a first aspect there is provided a pulse filter cartridge for an air treatment machine, the filter cartridge being configured to surround a body of the air treatment machine, the filter cartridge comprising: a filter media surrounding an inner space; a first end pan arranged at a first end of the filter cartridge, an inner side of the first end pan being configured to face the body and an outer side of the first end pan being configured to interact with a fastening arrangement of the air treatment machine; wherein the first end pan of the filter cartridge comprises a guiding section on the inner side, the guiding section being configured to be arranged in abutment with a correspondingly shaped end section of the body, thereby ensuring a centralized position of the filter cartridge on the body, and wherein the first end pan further comprises a fastening section on the outer side for interaction with the fastening arrangement of the air treatment machine, the fastening section being shaped so as to, when mating with the fastening arrangement, position the filter cartridge in a predetermined rotational orientation on the body.

The pulse filter cartridge comprises a first end and a second end. The first end pan is arranged at the first end and an annular second end pan is typically arranged at the second end. The second end is thus at least partly open.

The pulse filter cartridge will hereinafter be referred to as the filter cartridge but it is to be understood that it is a pulse filter cartridge. The filter cartridge is thus configured to allow the particulate matter to accumulate on an external surface of the filter media and it is configured to get pulses of compressed air provided at regular intervals to the inner space. The filter cartridge is thus configured to be arranged in the air treatment machine such that contaminated air to be treated flows from the exterior of the filter media into the inner space and out through the opening at the second end of the filter cartridge. When particulate matter from the contaminated air has been accumulated on the exterior of the filter media, a pulse of compressed air will be provided inside the inner space and the particulate matter will thereby loosen from the exterior of the filter media and can be collected below the filter cartridge.

The filter cartridge comprising a first end pan with a guiding section and a fastening section on opposite sides, will not require any threaded axle extending through the first end pan and will thereby reduce the risk for leakages and also facilitate mounting and dismounting of the filter cartridge. The guiding section of the first end pan of the filter cartridge being configured to abut and mate with a correspondingly shaped end section of the body, will guide the filter cartridge into a centralized position around the body. Thus, the guiding section and the end section of the body will, by means of its shapes, make sure that the filter cartridge is correctly positioned around the body. During mounting, the operator will easily feel when the guiding section mates or engages with the end section of the body and will thereby know when the filter cartridge has been correctly mounted on the body. Furthermore, the fastening section on the outside of the first end pan is shaped to ensure that the filter cartridge is positioned in a predetermined rotational orientation on the body. The shape of the fastening section will thus ensure a predetermined rotational orientation of the filter cartridge. This way, the mounting of the filter cartridge will be facilitated and a correct rotational orientation of the filter cartridge is ensured. This is specifically advantageous in cases where the filter cartridge is configured such that it is crucial that, for example, a specific side of the filter cartridge is arranged upwards or similar. By having a first end pan with a guiding section and a fastening section configured to mate with the body and the fastening arrangement respectively, no tool will be required to mount or dismount the filter cartridge.

The filter cartridge may have a cylindrical shape or a conical shape. The filter media may thus surround a cylindrically shaped inner space. The body of the air treatment machine may be cylindrically or conically shaped. The filter cartridge is configured to be slid onto the body, such that the body is inserted into the inner space of the filter cartridge. The filter cartridge is thus mounted on the body by placing the second end of the filter cartridge over the body and moving the filter cartridge linearly over the body until the first end pan and the guiding section mates with the end section of the body. The filter cartridge will be supported by the body when being correctly mounted. When the filter cartridge has been positioned correctly, the fastening arrangement of the air treatment machine will be arranged to interact with the fastening section of the end pan and thereby secure the filter cartridge in the air treatment machine. The filter cartridge may be rotated such that the fastening section mates correctly with the fastening arrangement, whereby the predetermined rotational orientation of the filter cartridge is achieved.

The filter cartridge typically comprises sealing elements at the second end. The sealing elements are configured to seal against a partition wall of the air treatment machine in which the filter cartridge is mounted. The partition wall separates a raw gas compartment and a clean gas compartment of the air treatment machine and the sealing elements are configured to prevent contaminated air from bypassing the filter cartridge. If the sealing elements are pressed too weakly against the partition wall, contaminated air may reach the clean gas compartment unfiltered. If the sealing elements are pressed too tightly against the partition wall, the sealing elements may be damaged which also will lead to contaminated air reaching the clean gas compartment unfiltered. By having a filter cartridge according to the present disclosure, with the first end pan comprising a guiding section and a fastening section, the filter cartridge will be correctly positioned also in relation to the partition wall and allows the sealing elements to be pressed in the right tolerance limits against the partition wall. By sliding the cartridge onto the body and then securing it with the fastening arrangement, a precise distance to the partition wall is achieved. This ensures that there is no overloading of the sealing elements or the filter cartridge itself and it reduces the risk for contaminated air bypassing the filter cartridge due to insufficient sealing. Thus, both the sealing elements and the sealing surfaces are protected, leakages are prevented and the risk for material failure or unexpected operational disruptions is reduced.

The fastening section may be shaped to mate with the fastening arrangement only in the predetermined rotational orientation of the filter cartridge. The predetermined rotational orientation is thus a discrete orientation determined by the shape of the fastening section. Alternatively, the fastening section may be shaped to mate with the fastening arrangement in at least two predetermined rotational orientations.

The first end pan is suitably completely closed. That is, there is no opening in the first end pan. Thus, the first end pan may completely cover the first end of the filter cartridge. Compared to the known solution where a threaded bolt extends through a hole in the first end pan, there will thus be less risk for leakage through the first end pan and the performance of the filter cartridge is improved.

The guiding section and the fastening section may be integrally formed in the first end pan. That is, the first end pan with the guiding section and the fastening section may be one single entity or unit, manufactured from one piece of material. This will facilitate manufacturing of the first end pan and minimize the risk of leakages or damages.

The guiding section and the fastening section may have similar or identical peripheral or circumferential shapes. The guiding section may be created when forming the fastening section or vice versa. Thus, the guiding section and the fastening section may be created in one manufacturing step using the same tool. The first end pan may for example be manufactured by press forming, hydroforming, molding, roll forming or additive manufacturing. Alternatively, the guiding section and the fastening section have different shapes. As an example, the guiding section may have an essentially circular peripheral shape and the fastening section may have an essentially oval peripheral shape.

In some examples, the fastening section is a protrusion extending from the outer side of the first end pan and the guiding section is a recess formed on an inner side of the protrusion. That is, the fastening section is a protrusion extending from the outer side of the first end pan and the guiding section is a recess formed on the inner side of the first end pan. Thus, the protruding fastening section will create a recess on the inner side of the first end pan. In this event, the guiding section will be configured to mate with a correspondingly shaped protruding end section of the body. Thus, the protruding end section of the body will be inserted into the recess of the guiding section and thereby ensure a laterally centralized position on the body. The protruding fastening section on the outer side of the first end pan will mate with the fastening arrangement, such that the filter cartridge is positioned in a predetermined rotational orientation on the body. The fastening section may be somewhat frustoconically shaped with a base and a top. The frustoconically shaped fastening section may have a larger base diameter than top diameter. The fastening section may thus taper in direction away from the first end pan.

In some examples, the fastening section is a recess formed on the outer side of the first end pan and the guiding section is a protrusion extending from the inner side of the first end pan. The fastening section may thus be a recess formed inside the protruding guiding section and could be created when forming the guiding section. In this event, the guiding section will be configured to mate with a correspondingly shaped recess in end section of the body. Thus, the protruding guiding section will be inserted into the recess of the end section of the body and thereby ensure a laterally centralized position on the body. The recess of the fastening section on the outer side of the first end pan will mate with the fastening arrangement, such that the filter cartridge is positioned in a predetermined rotational orientation on the body.

In other examples, the fastening section is a protrusion extending from the outer side of the first end pan and the guiding section is a protrusion extending from the inner side of the first end pan.

The peripheral shape of the fastening section may be such that it enables two or more discrete rotational orientations on the body. The peripheral shape of the fastening section may have a discrete rotational symmetry, such as a two-fold rotational symmetry. A two-fold rotational symmetry means that the fastening section looks the same after being rotated by and angle of 180 degrees. In other words, the shape of the fastening section may remain unchanged after a rotation of 180 degrees. Discrete rotational symmetry means that the shape remains unchanged under specific rotations. Unlike continuous rotational symmetry (where any angle of rotation is allowed), discrete symmetry only considers specific angles. The fastening section may have a three-fold rotational symmetry, which means that it looks the same after a 120° rotation (e.g. an equilateral triangle). The fastening section may have a four-fold rotational symmetry, which means that it looks the same after a 90° rotation (e.g. a square). By having a two-fold or discrete rotational symmetry, the fastening section and the interaction with the fastening arrangement of the air treatment machine, will ensure that the filter cartridge cannot be arranged in any rotational orientation in relation to the fastening arrangement and thus the air treatment machine. The rotational symmetry of the shape of the fastening section will ensure that the filter cartridge is arranged in the predetermined rotational orientation and thereby facilitate mounting the of the filter cartridge. The fastening section may have an essentially oval, rectangular or triangular peripheral or circumferential shape.

Similarly, the peripheral shape of the guiding section may have a discrete rotational symmetry, such as a two-fold rotational symmetry. The guiding section may have a three-fold rotational symmetry, which means that it looks the same after a 120° rotation (e.g. an equilateral triangle). The guiding section may have a four-fold rotational symmetry, which means that it looks the same after a 90° rotation (e.g. a square). The guiding section may have an essentially oval, rectangular or triangular peripheral or circumferential shape.

According to a second aspect of the present disclosure, there is provided an air treatment machine for air pollution control, the air treatment machine comprising: a pulse filter cartridge as disclosed herein; a body configured to be surrounded by the pulse filter cartridge; and a fastening arrangement for attaching the pulse filter cartridge to the air treatment machine, wherein the body comprises an end section having a shape corresponding to the shape of the guiding section of the pulse filter cartridge, the filter cartridge being arranged with the guiding section in abutment with the end section of the body to thereby ensure a centralized position of the pulse filter cartridge on the body, and wherein the fastening arrangement is mating with the fastening section of the pulse filter cartridge to position the pulse filter cartridge in a predetermined rotational orientation on the body.

It is to be understood that advantages and features of the second aspect are to a large extent analogous to those described above in connection with the first aspect. Examples mentioned in relation to the first aspect are largely compatible with the second aspect.

The fastening arrangement may comprise an attachment part configured to engage with the fastening section of the first end pan of the filter cartridge; and a clamping element connected to the air treatment machine and pivotally arranged in relation to the attachment part, wherein the clamping element is configured to, in a closed position, press the attachment part against the first end pan of the filter cartridge and thereby attach the filter cartridge to the air treatment machine. The attachment part of the fastening arrangement is shaped to engage with the fastening section of the filter cartridge. The attachment part may have a shape corresponding to the shape of the fastening section of the filter cartridge. The clamping element is pivotally arranged and can be pivoted between an open position and a closed position. In the open position, the clamping element is not affecting the attachment part and the attachment part is thereby loosely arranged in relation to the first end pan of the filter cartridge. In the closed position, the clamping element is pressing the attachment part against the first end pan of the filter cartridge and the filter cartridge will thereby be clamped between the body and the fastening arrangement of the air treatment machine. This way, the filter cartridge will be firmly attached to the air treatment machine without the need of any extra tools.

The fastening arrangement may be movably connected to the air treatment machine. The clamping element and the attachment part may thus be displaced to enable mounting and dismounting of the filter cartridge on the body. In some examples the fastening arrangement can be completely removed from the air treatment machine, in other examples the fastening arrangement is hingedly connected to the air treatment machine and can be pivoted to the side to allow mounting/dismounting of the filter cartridge.

The attachment part may have a shape corresponding to the peripheral shape of the fastening section of the filter cartridge. This way, the attachment part and the fastening section can engage and the filter cartridge is guided into the predetermined rotational orientation. The shape of the attachment part may have a discrete rotational symmetry, such as a two-fold rotational symmetry.

In some examples, the attachment part encircles the fastening section of the filter cartridge. The attachment part may thus comprise an aperture shaped to fit the fastening section of the end pan in at least one predetermined rotational orientation. This is typically the case when the fastening section of the filter cartridge is a protrusion on the outer side of the first end pan. In the event that the fastening section is somewhat conically shaped with a larger base diameter than top diameter, the attachment part may have aperture corresponding to the base diameter of the fastening section. The shape of the aperture may have a discrete rotational symmetry, such as a two-fold rotational symmetry.

In some examples, the attachment part is configured to be inserted into the fastening section of the filter cartridge. This is typically the case when the fastening section is a recess formed in the first end pan. The attachment part may then be engaging with the recess. For example, the attachment part may have a shape corresponding the shape of the bottom of the recess of the fastening section.

The fastening arrangement may be referred to as an eccentric cam lock. The clamping element may thus be a lever with eccentric cam portions. The cam portions are off-centre relative to an axis of rotation. When the clamping element is pivoted to the closed position, the eccentric cam portions rotates and the rotation causes the cam portions to move closer to and finally press against the attachment part, creating a clamping force. The clamping force secures the parts together.

The fastening arrangement may further comprise a pivot shaft connected to the air treatment machine, wherein the attachment part and the clamping element are pivotally connected to the pivot shaft. The pivot shaft may extend in a direction traverse to the longitudinal direction of the body and thus the longitudinal direction of a mounted filter cartridge. The pivot shaft is suitably arranged to traverse the first end of the filter cartridge and thus the first end pan. With the attachment part and the clamping element connected to the pivot shaft, all three components can be handled at the same time. The fastening arrangement can this way easily be handled when mounting or dismounting the filter cartridge.

The pivot shaft of the fastening arrangement may be movably connected to the air treatment machine. The pivot shaft with the attachment part and the clamping element connected to it may thus be displaced to enable mounting and dismounting of the filter cartridge on the body. In some examples the pivot shaft can be completely removed from the air treatment machine, in other examples the pivot shaft is hingedly connected to the air treatment machine and can be pivoted to the side to allow mounting/dismounting of the filter cartridge.

When mounting a filter cartridge, the pivot shaft with the attachment part and the clamping element is displaced and the filter cartridge can be mounted over the body. When the filter cartridge has been centrally arranged on the body the fastening arrangement is moved into position and the filter cartridge may be rotated to the predetermined rotational orientation in order to enable the fastening section to mate with the attachment part of the fastening arrangement. When the filter cartridge is in the predetermined rotational orientation, the clamping element is pivoted to the closed position and the filter cartridge is thereby secured in the air treatment machine.

The body of the air treatment machine may be compartmentalized. The body may thus comprise at least one partition plate, dividing the inner space of the filter cartridge into smaller compartments. This will increase the pressure in the compartments when the pulses of compressed air are provided to clean the filter media.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 shows a perspective view of a pulse filter cartridge for an air treatment machine according to an example of the present disclosure.
Figure 2 shows an end pan of a pulse filter cartridge according to an example of the present disclosure.
Figures 3a-c show end pans of a pulse filter cartridge according to examples of the present disclosure.
Figure 4 shows a pulse filter cartridge and a fastening arrangement according to an example of the present disclosure.
Figures 5a-c show a fastening arrangement for a pulse filter cartridge according to examples of the present disclosure.
Figure 6 shows a pulse filter cartridge and a fastening arrangement according to an example of the present disclosure.
Figure 7 shows an air treatment machine according to an example of the present disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

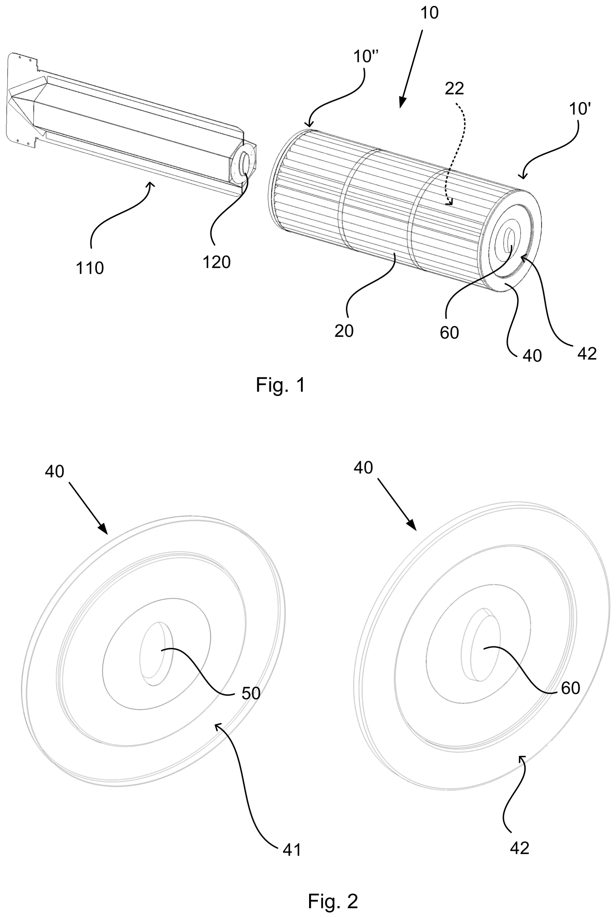

Figure 1 shows a pulse filter cartridge 10 for an air treatment machine 100 according to an example of the present disclosure. The filter cartridge 10 is configured to surround a body 110 of the air treatment machine 100 and comprises a filter media 20 surrounding an inner space 22. When mounted, the body 110 will thus be arranged inside inner space 22 of the filter cartridge 10. In this example, the filter cartridge 10 has a cylindrical shape and the body 110 comprises a partition plate which will divide the inner space 22 of the filter cartridge 10 into compartments. Such an arrangement may be referred to as the body 110 being compartmentalised.

The filter cartridge 10 has a first end 10' and a second opposite end 10" and comprises a first end pan 40 arranged at the first end 10'. An inner side 41 of the first end pan 40 is configured to face the body 110 and an outer side 42 of the first end pan 40 is configured to interact with a fastening arrangement (not shown) of the air treatment machine 100.

The first end pan 40 of the filter cartridge 10 comprises a guiding section 50 on the inner side 41, this is shown in Figure 2. The guiding section 50 is configured to be arranged in abutment with a correspondingly shaped end section 120 of the body 110, thereby ensuring a centralized position of the filter cartridge 10 on the body 110. The end pan 40 further comprises a fastening section 60 on the outer side 42 for interaction with the fastening arrangement 140 of the air treatment machine 100, the fastening section 60 being shaped so as to, when mating with the fastening arrangement 140, position the filter cartridge 10 in a predetermined rotational position on the body 110.

The peripheral shape of the fastening section 60 and the guiding section 50 has a discrete rotational symmetry. This way, the guiding section 50 will only engage with the correspondingly shaped end section 120 of the body 110, and the fastening section 60 will only engage with the fastening arrangement 140, when the filter cartridge 10 is in two or more discrete rotational orientations.

As shown in this example, the first end pan 40 is suitably completely closed. Thus, there is no opening in the first end pan. The guiding section 50 and the fastening section 60 may be integrally formed in the first end pan 40. The first end pan 40 may be manufactured by press forming, hydroforming, molding, roll forming or additive manufacturing.

Figure 2 shows two views of a first end pan 40 of a pulse filter cartridge 10 according to an example of the present disclosure. The filter cartridge 10 may be configured as in Figure 1. The figure to the left shows the inner side 41 of the first end pan 40 and the figure to the right shows the outer side 42 of the first end pan 40. In this example, the fastening section 60 is a protrusion extending from the outer side 42 of the first end pan 40 and the guiding section 50 is a recess formed on an inner side of the protrusion. Thus, the protruding fastening section 60 creates the recess constituting the guiding section 50 or vice versa.

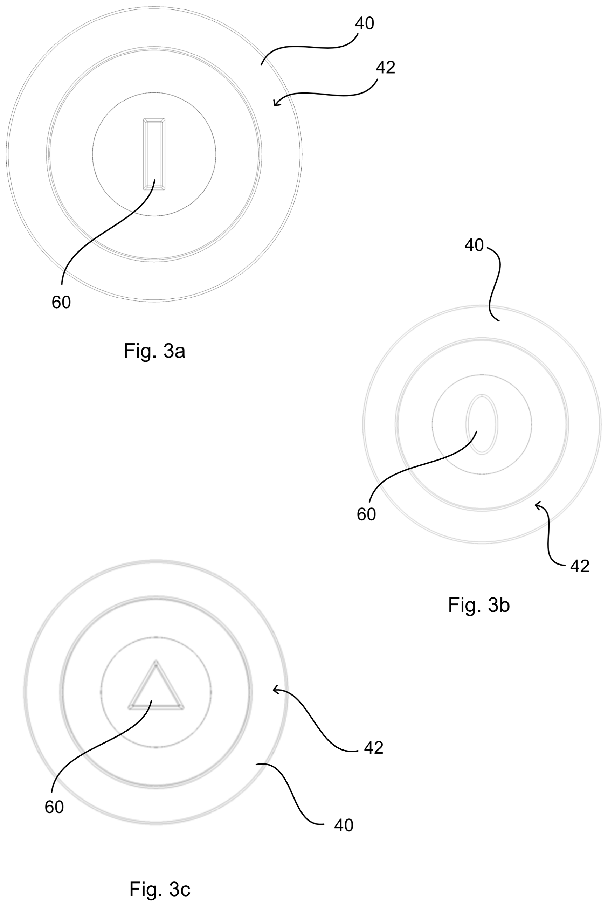

Figures 3a-c show first end pans 40 of a pulse filter cartridge 10 according to examples of the present disclosure. The filter cartridge 10 may be configured as in Figure 1. Figure 3a shows the first end pan 40 comprising a fastening section 60 having an essentially rectangular peripheral shape. Similarly, the guiding section 50 may have an essential rectangular peripheral shape. Figure 3b shows a first end pan 40 comprising a fastening section 60 having an oval or elliptical peripheral shape. Similarly, the guiding section 50 may have an oval or elliptical peripheral shape. Figure 3c shows a first end pan 40 comprising a fastening section 60 having a triangular peripheral shape. Similarly, the guiding section 50 may have a triangular peripheral shape.

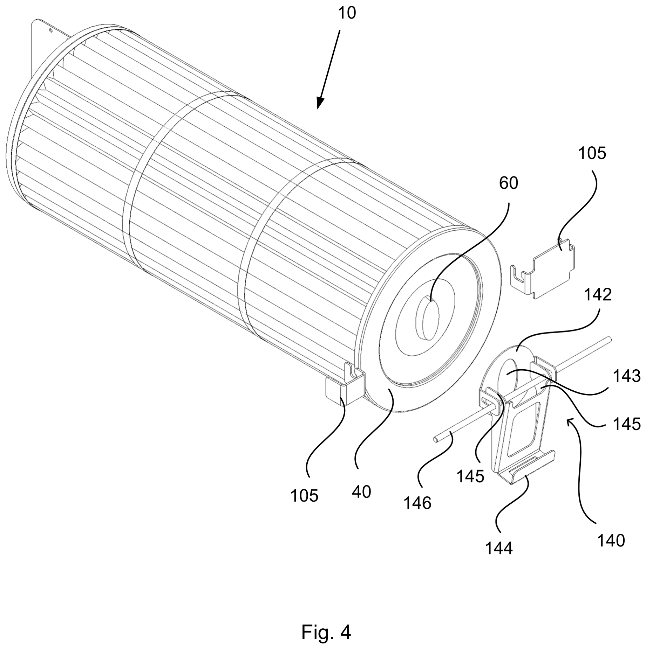

Figure 4 shows a pulse filter cartridge 10 and a fastening arrangement 140 according to an example of the present disclosure. In this figure, the filter cartridge 10 has an oval fastening section 60 but it is to be understood that the fastening section 60 could have any other shape that would enable positioning the filter cartridge 10 in a predetermined rotational orientation on the body 110. Also, in this figure, the filter cartridge 10 is arranged over the body 110.

The fastening arrangement 140 comprises an attachment part 142 configured to engage with the fastening section 60 of the first end pan 40 of the filter cartridge 10. The attachment part 142 is thus shaped to engage with the fastening section 60 of the filter cartridge 10. In this example, the attachment part 142 comprises a circular, essentially flat, plate comprising an aperture 143 with a shape corresponding to the peripheral shape of the fastening section 60 of the end pan 40. The fastening section 60 will only fit inside the aperture 143 when the filter cartridge 10 has any of two, in this case, discrete rotational orientations. Thus, the attachment part 142 encircles the fastening section 60 of the filter cartridge 10.

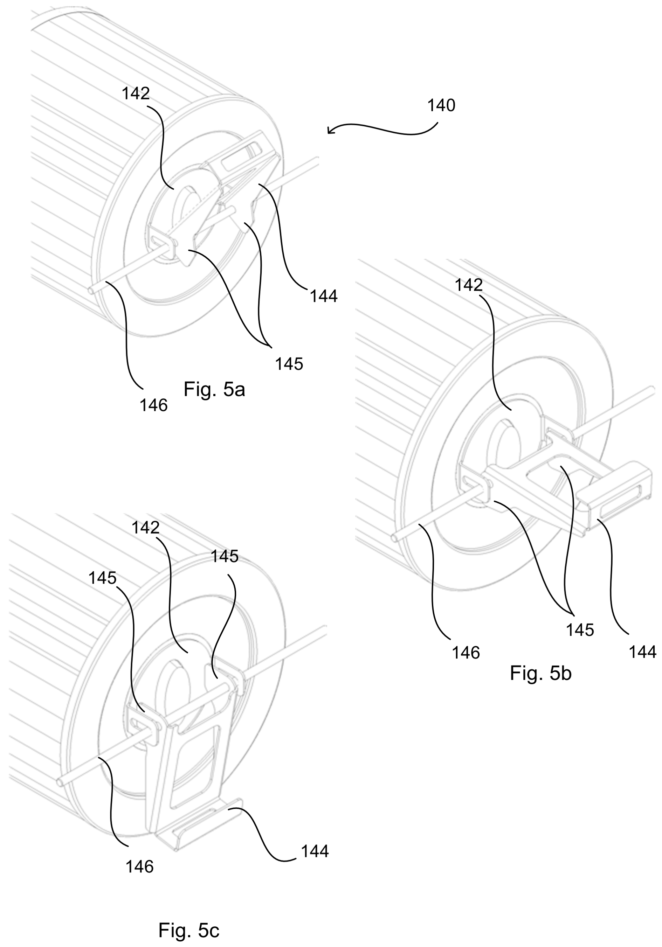

The fastening arrangement 140 further comprises a clamping element 144 configured to be connected to the air treatment machine 100 and pivotally arranged in relation to the attachment part 142. The clamping element 144 is configured to, in a closed position, press the attachment part 142 against the first end pan 40 of the filter cartridge 10 and thereby attach the filter cartridge 10 to the air treatment machine 100. The clamping element 144 is pivotally arranged and can be pivoted between an open position and a closed position (see Figures 5a-c). The clamping element 144 may be referred to as a lever. The clamping element 144 comprises eccentric cam portions 145. The cam portions 145 are thus off-centre relative to an axis of rotation. When the clamping element 144 is pivoted to the closed position, the eccentric cam portions 145 rotates and the rotation causes the cam portions 145 to move closer to, and finally abut, the attachment part 142, creating a clamping force. The clamping force secures the parts together.

In this example, the fastening arrangement 140 further comprises a pivot shaft 146 connected to the air treatment machine 100, wherein the attachment part 142 and the clamping element 144 are pivotally connected to the pivot shaft 146. The pivot shaft 146 is movably connected to the air treatment machine 100 and in this example the pivot shaft 146 is connected to the air treatment machine 100 via brackets 105 or similar. The pivot shaft 146 is arranged in slots in the brackets 105 and can easily be removed from the slots for allowing removal of the filter cartridge 10 from the air treatment machine 100.

Figures 5a-c show a fastening arrangement 140 for a pulse filter cartridge 10 according to examples of the present disclosure. The pulse filter cartridge 10 may be configured as in any of the other figures. The fastening arrangement 140 may be configured as disclosed in Figure 4. Figure 5a shows the fastening arrangement 140 in the open position. The clamping element 144 is pivoted such that it is not affecting the attachment part 142 and the attachment part 142 is thereby loosely arranged in relation to the first end pan 40 of the filter cartridge 10. The cam portions 145 of the clamping element 144 does not abut the attachment part 142 in the open position.

Figure 5b shows the clamping element 144 being pivoted almost halfway towards the closed position. As the clamping element 144 is pivoted, the cam portions 145 moves closer towards the attachment part 142.

Figure 5c shows the fastening arrangement 140 in the closed position. The clamping element 144 has now been pivoted such that it is applying a clamping force by means of the cam portions 145 on the attachment part 142. The clamping element 144 is thereby pressing the attachment part 142 against the first end pan 40 of the filter cartridge 10. The filter cartridge 10 will thereby be clamped between the body 110 and the fastening arrangement 140 of the air treatment machine 100. This way, the filter cartridge 10 will be firmly attached to the air treatment machine 100 without the need of any extra tools.

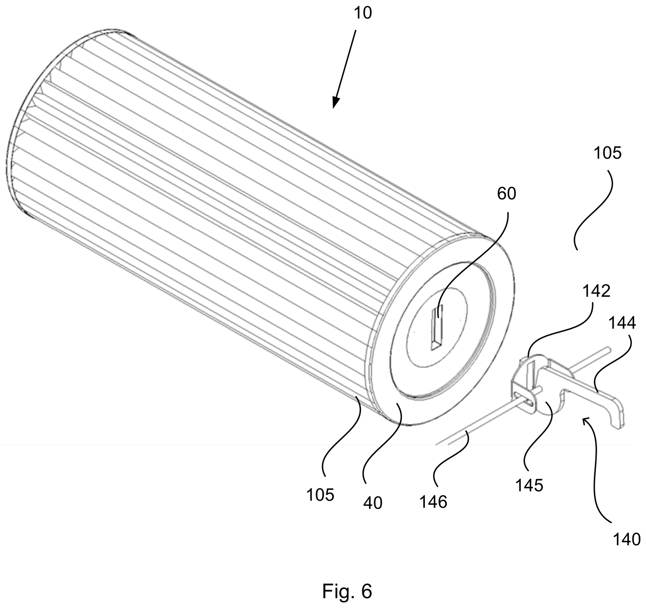

Figure 6 shows a pulse filter cartridge 10 and a fastening arrangement 140 according to an example of the present disclosure. In this example, the fastening section 60 is a recess on the outer side 42 of the first end pan 40 and the guiding section 50 is a protrusion on the inner side 41 of the first end pan 40. The fastening arrangement 140 comprises an attachment part 142 configured to at least partly be inserted into the fastening section 60 of the filter cartridge 10. The attachment part 142 is then engaging with the recess 60. The attachment part 142 may comprise an engaging portion with a peripheral shape corresponding the peripheral shape of the recess of the fastening section 60. As shown in the figure, the fastening section 60 and the engaging portion of the attachment part 142 are essentially rectangular in shape in this example.

The fastening arrangement 140 further comprises a clamping element 144 configured to be connected to the air treatment machine 100 and pivotally arranged in relation to the attachment part 142. The clamping element 144 is configured to, in a closed position, press the attachment part 142 against the first end pan 40 of the filter cartridge 10 and thereby attach the filter cartridge 10 to the air treatment machine 100. The clamping element 144 is pivotally arranged and can be pivoted between an open position and a closed position. The clamping element 144 may be referred to as a lever. The clamping element 144 comprises an eccentric cam portion 145. The cam portion 145 is thus off-centre relative to an axis of rotation. When the clamping element 144 is pivoted to the closed position, the eccentric cam portion 145 rotates and the rotation causes the cam portion 145 to move closer to and finally abut the attachment part 142, creating a clamping force. The clamping force secures the parts together.

In this example, the fastening arrangement 140 further comprises a pivot shaft 146 removably connected to the air treatment machine 100, wherein the attachment part 142 and the clamping element 144 are pivotally connected to the pivot shaft 146. The pivot shaft 146 may be connected to the air treatment machine 100 via brackets or similar.

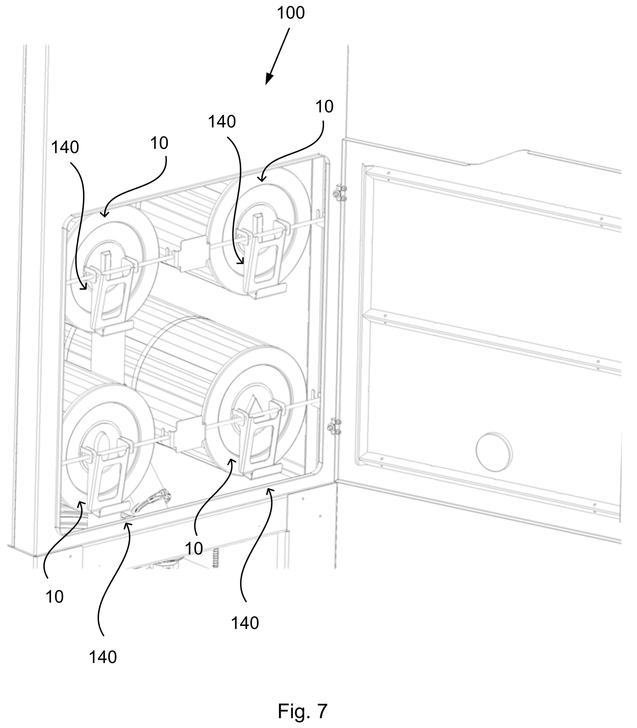

Figure 7 shows an air treatment machine 100 for air pollution control according to an example of the present disclosure. The air treatment machine 100 comprises a pulse filter cartridge 10 as disclosed in any of figures 1-6. The air treatment machine 100 further comprises a body 110 configured to be surrounded by the pulse filter cartridge 10; and a fastening arrangement 140 for attaching the pulse filter cartridge 10 to the air treatment machine 100. In this example, the air treatment machine 100 comprises four pulse filter cartridges 10, four bodies 110 over which the pulse filter cartridges 10 are mounted and four fastening arrangements 140 for attaching the pulse filter cartridges 10. Each body 110 comprises an end section 120 having a shape corresponding to the shape of the guiding section 50 of the pulse filter cartridge 10 as described herein. The pulse filter cartridges 10 are here arranged with the guiding section 50 engaged with the end section 120 of the bodies 110 to ensure a centralized position of the pulse filter cartridges 10 on the bodies 110. Furthermore, the pulse filter cartridges 10 have been rotated into a predetermined rotational orientation to allow the fastening section 60 of each filter cartridge 10 to engage with the corresponding fastening arrangement 140.

The fastening arrangements 140 of the air treatment machine 100 may be configured as disclosed in Figure 4-6.

The person skilled in the art realizes that the present disclosure is not limited to the preferred embodiments described above. The person skilled in the art further realizes that modifications and variations are possible within the scope of the appended claims. Additionally, variations to the disclosed embodiments can be understood and effected by the skilled person in practicing the claimed disclosure, from a study of the drawings, the disclosure, and the appended claims.

## Claims

1. A pulse filter cartridge (10) for an air treatment machine (100), the filter cartridge (10) being configured to surround a body (110) of the air treatment machine (100), the filter cartridge (10) comprising:
- a filter media (20) surrounding an inner space (22); and
- a first end pan (40) arranged at a first end (10') of the filter cartridge (10), an inner side (41) of the first end pan (40) being configured to face the body (110) and an outer side (42) of the first end pan (40) being configured to interact with a fastening arrangement (140) of the air treatment machine (100);
wherein the first end pan (40) of the filter cartridge (10) comprises a guiding section (50) on the inner side (41), the guiding section (50) being configured to be arranged in abutment with a correspondingly shaped end section (120) of the body (110), thereby ensuring a centralized position of the filter cartridge (10) on the body (110), and wherein the first end pan (40) further comprises a fastening section (60) on the outer side (42) for interaction with the fastening arrangement (140) of the air treatment machine (100), the fastening section (60) being shaped so as to, when mating with the fastening arrangement (140), position the filter cartridge (10) in a predetermined rotational orientation on the body (110).

2. The pulse filter cartridge (10) according to claim 1, wherein the first end pan (40) is completely closed.

3. The pulse filter cartridge (10) according to claim 1 or 2, wherein the guiding section (50) and the fastening section (60) are integrally formed in the first end pan (40).

4. The pulse filter cartridge (10) according to any one of the preceding claims, wherein the fastening section (60) is a protrusion extending from the outer side (42) of the first end pan (40) and the guiding section (50) is a recess formed on an inner side of the protrusion.

5. The pulse filter cartridge (10) according to any one of claims 1-3, wherein the fastening section (60) is a recess formed on the outer side (42) of the first end pan (40) and the guiding section (50) is a protrusion extending from the inner side (41) of the first end pan (40).

6. The pulse filter cartridge (10) according to any one of the preceding claims, wherein the peripheral shape of the fastening section (60) has a discrete rotational symmetry.

7. The pulse filter cartridge (10) according to any one of the preceding claims, wherein the peripheral shape of the guiding section (50) has a discrete rotational symmetry.

8. The pulse filter cartridge (10) according to any one of the preceding claims, wherein the first end pan (40) is manufactured by press forming, hydroforming, molding, roll forming or additive manufacturing.

9. An air treatment machine (100) for air pollution control, the air treatment machine (100) comprising:
- a pulse filter cartridge (10) according to any one of the preceding claims;
- a body (110) configured to be surrounded by the filter cartridge (10); and
- a fastening arrangement (140) for attaching the filter cartridge (10) to the air treatment machine (100),
wherein the body (110) comprises an end section (120) having a shape corresponding to the shape of the guiding section (50) of the filter cartridge (10), the filter cartridge (10) being arranged with the guiding section (50) in abutment with the end section (120) of the body (110) to thereby ensure a centralized position of the filter cartridge (10) on the body (110), and wherein the fastening arrangement (140) is mating with the fastening section (60) of the filter cartridge (10) to position the filter cartridge (10) in a predetermined rotational orientation on the body (110).

10. The air treatment machine (100) according to claim 9, wherein the fastening arrangement (140) comprises:
- an attachment part (142) configured to engage with the fastening section (60) of the first end pan (40) of the filter cartridge (10); and
- a clamping element (144) connected to the air treatment machine (100) and pivotally arranged in relation to the attachment part (142),
wherein the clamping element (144) is configured to, in a closed position, press the attachment part (142) against the first end pan (40) of the filter cartridge (10) and thereby attach the filter cartridge (10) to the air treatment machine (100).

11. The air treatment machine (100) according to claim 10, wherein the attachment part (142) has a shape corresponding to the peripheral shape of the fastening section (60) of the filter cartridge (10).

12. The air treatment machine (100) according to claim 10 or 11, wherein the attachment part (142) encircles the fastening section (60) of the filter cartridge (10).

13. The air treatment machine (100) according to any one of claims 10-12, wherein the fastening arrangement (140) further comprises:
- a pivot shaft (146) connected to the air treatment machine (100),
wherein the attachment part (142) and the clamping element (144) are pivotally connected to the pivot shaft (146).

14. The air treatment machine (100) according to any one of claims 10-13, wherein the shape of the attachment part (142) has a discrete rotational symmetry.

15. The air treatment machine (100) according to any one of claims 10-14, wherein the body (110) is compartmentalized.
